# EUROPÄISCHE PATENTSCHRIFT

(11) **EP 3 177 842 B1**
(45) Veröffentlichungstag und Bekanntmachung des Hinweises auf die Patenterteilung: **16.05.2018**
(21) Anmeldenummer: 15774564.7
(22) Anmeldetag: 28.09.2015
(51) Int. Cl.: F16D 11/04, F16D 43/24

(54) **KUPPLUNG VON ZWEI WELLEN MIT MECHANISCH VORGEGEBENEM KUPPELWINKEL UND ZUGEHÖRIGES KUPPELVERFAHREN**
COUPLING OF TWO SHAFTS WITH MECHANICALLY PREDETERMINED COUPLING ANGLE AND ASSOCIATED COUPLING METHOD
COUPLAGE DE DEUX ARBRES À UN ANGLE DE COUPLAGE MÉCANIQUE PRÉDÉFINI ET PROCÉDÉ DE COUPLAGE CORRESPONDANT

(30) Priorität: 02.10.2014 EP 14187494
(43) Veröffentlichungstag der Anmeldung: 14.06.2017
(73) Patentinhaber: Siemens Aktiengesellschaft, 80333 München (DE)
(72) Erfinder: FELWOR, David, 46147 Oberhausen (DE); BENNAUER, Martin, 46242 Bottrop (DE); KORKMAZ, Özgür, 46049 Oberhausen (DE); RICKEN, Oliver, 45149 Essen (DE); SCHINDLER, Christoph, 45219 Essen (DE); WALL, Dirk, 45473 Mülheim (DE)
(86) Internationale Anmeldenummer: PCT/EP2015/072213
(87) Internationale Veröffentlichungsnummer: WO 2016/050671

(56) Entgegenhaltungen:
- DE-B- 1 294 776
- US-A- 3 441 116
- US-A1- 2013 334 001

## Beschreibung

Bei Gasturbinenkraftwerken wird häufig zur Erhöhung des Wirkungsgrads aus der Abhitze der Gasturbine Dampf erzeugt, mit dem eine Dampfturbine zur Stromerzeugung betrieben werden kann. Eine Kupplung für eine Gasturbine ist aus der US 3 441 116 A1 bekannt. Dabei sind die Gasturbine und der Generator fest miteinander verbunden. Die Dampfturbine kuppelt mit der Gasturbine, sobald die Frequenz der Dampfturbine der Gasturbine entspricht. Im Regelfall erfolgt das Kuppeln mit einem zufälligen Kuppelwinkel. Ein zufälliger Kuppelwinkel kann zu höherer Unwucht führen. Daher ist es günstig mit einem gezielten Kuppelwinkel zu kuppeln, der für eine reduzierte Unwucht sorgt. Das Kuppeln einer Gasturbine und einer Dampfturbine ist ein wichtiges Beispiel; Kuppeln mit einem gezielten Kuppelwinkel ist jedoch in vielen Fällen erwünscht.

Aufgabe der Erfindung ist es eine Kupplung bereitzustellen, welche ein Kuppeln mit einem gezielten Kuppelwinkel ermöglicht.

Es wurde erkannt, dass eine Kupplung von einer ersten Welle mit einer zweiten Welle bereit zu stellen ist, die so ausgebildet ist, dass ein Kuppeln der ersten Welle mit der zweiten Welle erfolgt, wenn die erste Welle eine höhere Geschwindigkeit hat als die zweite Welle. Dabei ist ein Kuppelwinkel zwischen erster Welle und zweiter Welle durch die Kupplung mechanisch vorgegeben. Kupplungen, bei denen das Kuppeln erfolgt, wenn die erste Welle eine höhere Geschwindigkeit erreicht hat, als die zweite Welle, sind im Stand der Technik verbreitet. Es versteht sich, dass die erste Welle dabei nur vorübergehend eine höhere Geschwindigkeit haben kann als die zweite Welle. Nach Abschluss des Kuppelns ist die Geschwindigkeit der beiden Wellen gleich.

Allerdings sind dabei verschiedene Kuppelwinkel möglich. Der jeweilige Kuppelwinkel ergibt sich weitgehend zufällig. Die Erfindung setzt im Gegensatz dazu darauf, dass die Kupplung von ihrer Ausgestaltung her nur einen bestimmten Kuppelwinkel gestattet, also dass der Kuppelwinkel mechanisch vorgegeben ist. Hierfür sind verschiedene Maßnahmen denkbar. Ein wichtiges Beispiel wird nachfolgend näher beschrieben.

Bei der ersten Welle kann es sich um eine Dampfturbine und bei der zweiten Welle um eine Gasturbine handeln. Dies ist aus derzeitiger Sicht die wesentliche Anwendung der Erfindung. Da auch viele andere Anwendungen möglich sind, werden die allgemeinen Begriffe erste Welle und zweite Welle gewählt.

Die Kupplung ist als selbst synchronisierende Schaltkupplung ausgebildet mit folgendem Aufbau:
Die erste Welle weist einen Bereich mit schraubenförmigen Rillen auf, an den schraubenförmigen Rillen ist eine Gleitkomponente derart angebracht, dass die Gleitkomponente sich aufgrund der schraubenförmigen Rillen in Axialrichtung der ersten Welle bewegt, wenn die Drehgeschwindigkeit der ersten Welle und der Gleitkomponente nicht übereinstimmt.

Die Gleitkomponente kann durch Bewegung in Axialrichtung der ersten Welle in eine Position gebracht werden, dass die erste Welle und die zweite Welle kraftschlüssig verbunden sind.

An der Gleitkomponente ist eine Sperrradanordnung angebracht. Die zweite Welle weist eine Sperrklinkenanordnung auf, welche in die Sperrradanordnung eingreift, sobald die erste Welle eine höhere Drehgeschwindigkeit als die zweite Welle aufweist. Damit wird erreicht, dass die Gleitkomponente sich mit der Drehgeschwindigkeit der zweiten Welle dreht, wodurch sich die Gleitkomponente in Axialrichtung der ersten Welle bewegt und die erste Welle und die zweite Welle kraftschlüssig verbindet.

Der oben beschriebene Aufbau ist bei selbst synchronisierenden Schaltkupplungen verbreitet. Als Sperrradanordnung dient dabei ein Sperrrad mit einer Vielzahl von asymmetrischen Zähnen, die gleichmäßig um den Umfang verteilt ist. Damit ist eine Vielzahl an Kuppelwinkeln möglich.

Um einen mechanisch vorgegebenen Kuppelwinkel zu erreichen, ist bei der erfindungsgemäßen Ausgestaltung die Sperrradanordnung so ausgebildet, dass nur an genau einer Umfangsposition ein Eingriff der Sperrklinkenanordnung möglich ist. Bei der Sperrklinkenanordnung kann es sich um eine gewöhnliche Sperrklinke handeln. Es ist aber eine Vielzahl ähnlicher Aufbauten denkbar, die ein Einrasten in die Sperrradanordnung an der einen Umfangsposition bewirkt.

In einer Ausführungsform der Erfindung ist der mechanisch vorgegebene Kuppelwinkel einstellbar, insbesondere im Hinblick auf die Vermeidung von Unwuchten. Es ist also möglich, den Kuppelwinkel nicht etwa einmal bei der Produktion vorzugeben, sondern anzupassen. Dies erlaubt die Kupplung für verschiedene vorgegebene Kuppelwinkel in derselben Weise zu fertigen und anhand der konkreten Situation den gewünschten mechanisch vorgegebenen Kuppelwinkel einzustellen. Vor allem aber ist zu beachten, dass der gewünschte mechanisch vorgegebene Kuppelwinkel oft nicht im Vorhinein bekannt ist. Vielmehr ergibt sich dieser aus Versuchen, bei denen untersucht wird, bei welchem Kuppelwinkel die Unwucht der gekuppelten Wellen am niedrigsten ist. Darüber hinaus kann sich der Kuppelwinkel, bei dem die Unwucht am niedrigsten ist, im Betrieb, insbesondere aber bei erforderlichen Wartungsarbeiten ändern.

In einer Ausführungsform der Erfindung ist die Sperrradanordnung so ausgebildet, dass die Umfangsposition einstellbar ist. Dies erlaubt den mechanisch vorgegebenen Kuppelwinkel einzustellen. Wie oben geschildert ist dies gerade im Hinblick der Vermeidung von Unwuchten sehr gewünscht. Dies kann durch eine Einstellung der Umfangsposition, bei der die Sperrklinkenanordnung in die Sperrradanordnung eingreifen kann, erfolgen.

In einer Ausführungsform weist die Sperrradanordnung ein Sperrrad mit einer Mehrzahl von über den Umfang verteilten asymmetrischen Zahnflanken auf. Dabei befindet sich neben dem Sperrrad ein Kodierrad, welches nur an der genau einen Umfangsposition eine Aussparung aufweist, so dass die Sperrklinkenanordnung nur an der genau einen Umfangsposition eingreifen kann. Es versteht sich, dass dies voraussetzt, dass die Sperrklinkenanordnung entsprechend ausgestaltet ist. So ist etwa eine übliche Sperrklinke einzusetzen, welche in Axialrichtung der beiden Wellen so ausgedehnt ist, dass das daneben angeordnete Kodierrad eine Vertiefung aufweisen muss, damit ein Eingriff in das Sperrrad erfolgen kann.

In einer Ausführungsform ist mindestens ein weiteres Kodierrad vorhanden, welches genau eine Vertiefung am Umfang aufweist. Dies gestattet unter Umständen eine erleichterte und genauere Auswahl des mechanisch vorgegebenen Kuppelwinkels.

Durch eine drehbare Ausführung des Kodierrads oder der Kodierräder kann der mechanisch vorgegebene Kuppelwinkel durch Drehen des Kodierrads in einfacher Weise gewählt werden.

Es sei darauf hingewiesen, dass etwa zum Kuppeln einer Gasturbine mit einer Dampfturbine eine mehrstufige Schaltung eingesetzt werden kann. Das heißt innerhalb einer Kupplung werden mehrere Anordnungen der oben beschriebenen Art eingesetzt. Dies senkt die mechanische Belastung einer einzelnen Anordnung.

Die Erfindung sieht auch ein Verfahren zum Kuppeln einer ersten Welle mit einer zweiten Welle vor, wobei eine Kuppeleinrichtung eingesetzt wird, mit der ein Kuppelwinkel zwischen erster Welle und zweiter Welle mechanisch vorgegeben ist. Dabei erfolgt zugleich eine Steuerung des Kuppelns durch Beeinflussung der Drehgeschwindigkeit der ersten Welle und oder der zweiten Welle. Zusätzlich oder alternativ wird der der Kuppelzeitpunkt beeinflusst. Die Beeinflussungen erfolgen derart, dass die Steuerung des Kuppelns das Erreichen des mechanisch vorgegebenen Kuppelwinkels unterstützt. Die Kombination der beiden Maßnahmen, also der Einsatz einer Kupplung mit mechanisch vorgegebenem Kuppelwinkel und eine entsprechende Ansteuerung, ist vielversprechend. Der mechanisch vorgegebene Kuppelwinkel stellt sicher dass der Kuppelwinkel eingehalten wird. Eine entsprechende Ansteuerung sorgt dafür, dass dies vergleichsweise schnell erfolgen kann.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterung dienlich, in schematischer und/oder leicht verzerrter Form ausgeführt. Im Hinblick auf Ergänzungen der in der Zeichnung unmittelbar erkennbaren Lehren wird auf den einschlägigen Stand der Technik verwiesen.

Gleiche Bauteile oder Bauteile mit gleicher Funktion sind dabei mit gleichen Bezugszeichen gekennzeichnet.

Weitere Einzelheiten sollen anhand der Figuren erläutert werden. Dabei zeigen
- Fig. 1: eine schematische Darstellung einer Sperrradanordnung
- Fig. 2: eine seitliche schematische Darstellung einer Sperrradanordnung
- Fig. 3: eine im Stand der Technik bekannte selbst synchronisierende Schaltkupplung
- Fig. 4, 5 und 6: schematisch die Bewegung einer Gleitkomponente der Schaltkupplung nach Figur 3.

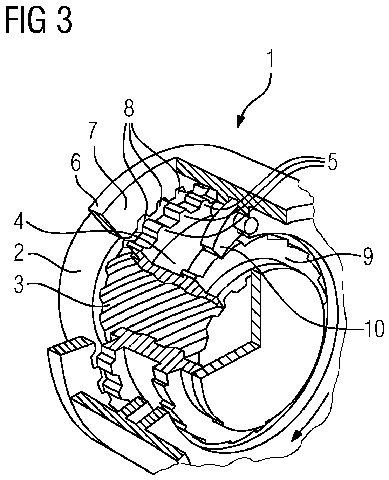

Zunächst soll anhand von Fig. 3 eine aus dem Stand der Technik bekannte selbst synchronisierende Schaltkupplung 1 erläutert werden. Es ist eine erste Welle 2 zu erkennen. Auf der ersten Welle 2 ist ein Bereich 3 mit schraubenförmigen Rillen. Am Bereich 3 mit den Rillen ist eine Gleitkomponente 4 angebracht. Die schraubenförmigen Rillen bewirken, dass die Gleitkomponente 4 sich in Axialrichtung der ersten Welle 2 bewegt, wenn die Drehgeschwindigkeiten der Gleitkomponente 4 und der ersten Welle 2 nicht übereinstimmen. An der Gleitkomponente 4 sind symmetrische Zähne 5 zu erkennen.

Ebenfalls zu erkennen ist ein zu einer zweiten Welle gehöriger Kuppelring 6. Der Kuppelring 6 weist einen Eingriffsbereich 7 auf. Im Eingriffsbereich 7 sind Nuten 8 angebracht, in die die symmetrischen Zähne 5 eingreifen können. Durch Bewegung der Gleitkomponente 4 zum Eingriffsbereich 7 gelangen die Zähne 5 in die Nuten 8. Damit sind die erste Welle 2 und die zweite Welle gekuppelt.

An der Gleitkomponente 4 ist ein Sperrrad 9 angebracht. Am Kuppelring 6 ist eine Sperrklinke 10 angeordnet. Am Pfeil ist die Drehrichtung der ersten Welle und der zweiten Welle zu erkennen. Solange sich die zweite Welle und damit der Kuppelring 6 schneller dreht als die erste Welle 2 kann sich die Gleitkomponente 4 frei mit der ersten Welle 2 mitdrehen. Sobald sich aber die erste Welle 2 schneller dreht als der Kuppelring 6 der zweiten Welle, greift die Sperrklinke 10 in das Sperrrad 9 ein. Damit kann sich die Gleitkomponente 4 nicht schneller drehen als der Kuppelring 6, an dem die Sperrklinke 10 befestigt ist. Die höhere Geschwindigkeit der ersten Welle 2 führt dazu, dass sich die Gleitkomponente 4 in Axialrichtung der ersten Welle bewegt. Somit wird erreicht, dass die Zähne 5 in die Nuten 8 des Eingriffsbereichs 7 eingreifen. Damit ist eine Kupplung zwischen erster Welle 2 und zweiter Welle erreicht.

Durch geeignete Anordnung wird erreicht, dass bei eingegriffener Sperrklinke 10 die Zähne 5 tatsächlich in die Nuten 8 eingreifen können, also die Drehlagen übereinstimmen.

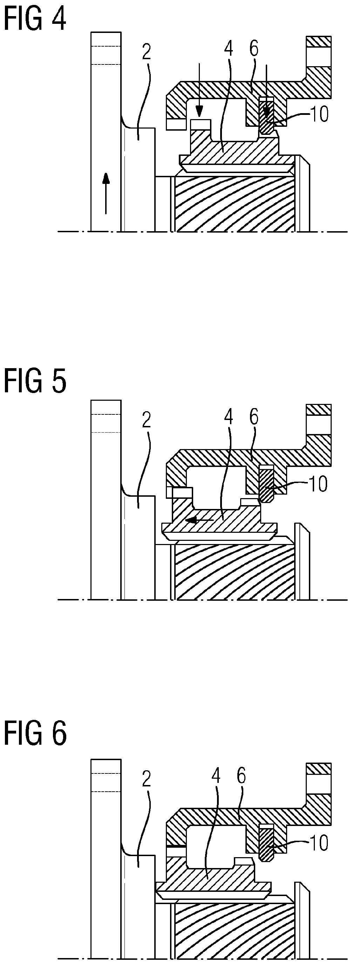

Die Figuren 4 bis 6 sind eine seitliche Ansicht eines Ausschnitts der oben beschriebenen Schaltkupplung nach Figur 3. Figur 4 zeigt dabei den Zustand, bei dem die Sperrklinke 10 eingegriffen ist. Dies führt dazu, dass sich die Gleitkomponente 4 nach links bewegt, wie in Figur 5 gezeigt. Damit ergibt sich schließlich der in Figur 6 gezeigte Zustand, bei dem die erste Welle 2 und die zweite Welle gekuppelt sind.

Nach der Schilderung dieser im Stand der Technik bekannten Kupplung nun zur erfindungsgemäßen Abwandlung.

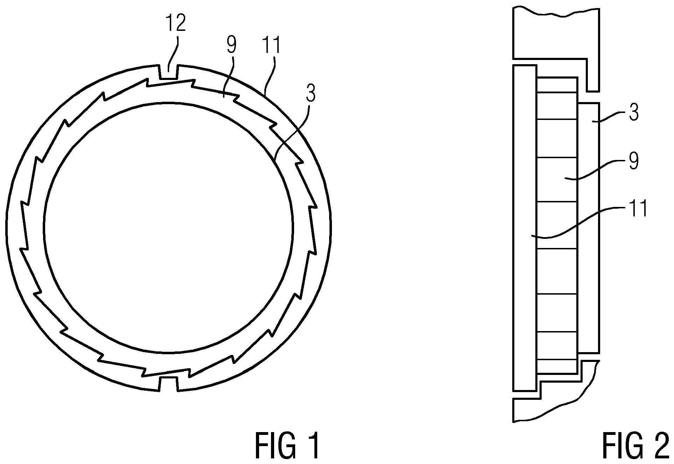

Um zu erreichen, dass die Kupplung zwischen der ersten Welle 2 und der zweiten Welle nur in einem mechanisch vorgegebenen Kuppelwinkel möglich ist, wird das Sperrrad 9 modifiziert. Dies ist in Fig. 1 gezeigt. Dazu wird eine Sperrradanordnung geschaffen, bei dem neben dem Sperrrad 9 noch ein Kodierrad 11 angeordnet ist.

In Figur 1, die eine Draufsicht in Axialrichtung der beiden Wellen zeigt, ist eine Linie mit asymmetrischen Zähnen zu erkennen, welche das Sperrrad 9 darstellt. Die äußere kreisförmige Linie stellt das Kodierrad 11 dar. Wie zu erkennen hat das Kodierrad 11 in der Fig. 1 oben eine Aussparung 12. An der Aussparung 12 kann die Sperrklinke 10 eingreifen. Freilich muss die Sperrklinke 10 in Axialrichtung der Wellen so ausgedehnt sein, dass sowohl ein Eingriff in das Sperrrad 9 als auch das Kodierrad 11 erfolgen muss.

Der innere Kreis in der Figur 1 zeigt den Bereich 3 der ersten Welle 2 mit den schraubenförmigen Rillen.

In Figur 2 ist eine seitliche Darstellung von Figur 1 zu erkennen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Kupplung von einer ersten Welle (2) mit einer zweiten Welle (6), die so ausgebildet ist, dass ein Kuppeln der ersten Welle (2) mit der zweiten Welle (6) erfolgt, wenn die erste Welle (2) eine höhere Geschwindigkeit hat als die zweite Welle (6), **dadurch gekennzeichnet, dass** ein Kuppelwinkel zwischen erster Welle (2) und zweiter Welle (6) durch die Kupplung (1) mechanisch vorgegeben ist, dass die Kupplung als selbst synchronisierende Schaltkupplung ausgebildet ist mit folgendem Aufbau:
die erste Welle (2) weist einen Bereich (3) mit schraubenförmigen Rillen auf,
am Bereich (3) mit schraubenförmigen Rillen ist eine Gleitkomponente (4) derart angebracht, dass die Gleitkomponente (4) sich aufgrund der schraubenförmigen Rillen in Axialrichtung der ersten Welle (2) bewegt, wenn die Drehgeschwindigkeit der ersten Welle (2) und der Gleitkomponente (4) nicht übereinstimmt;
die Gleitkomponente (4) kann durch Bewegung in Axialrichtung der ersten Welle (2) in eine Position gebracht werden, dass die erste Welle (2) und die zweite Welle (6) kraftschlüssig verbunden sind;
an der Gleitkomponente (4) ist eine Sperrradanordnung (9, 11) angebracht;
die zweite Welle (6) weist eine Sperrklinkenanordnung (10) auf, welche in die Sperrradanordnung (9, 11) eingreift, sobald die erste Welle (2) eine höhere Drehgeschwindigkeit als die zweite Welle (6) aufweist, so dass die Gleitkomponente (4) sich mit der Drehgeschwindigkeit der zweiten Welle (6) dreht, wodurch sich die Gleitkomponente (4) in Axialrichtung der ersten Welle (2) bewegt und die erste Welle (2) und die zweite Welle (6) kraftschlüssig verbindet;
wobei die Sperrradanordnung (9, 11) so ausgebildet ist, dass genau an einer Umfangsposition (12) ein Eingriff der Sperrklinkenanordnung (10) möglich ist.

2. Kupplung nach Anspruch 1,
**dadurch gekennzeichnet, dass**
der mechanisch vorgegebene Kuppelwinkel einstellbar ist, insbesondere im Hinblick auf die Vermeidung von Unwuchten.

3. Kupplung nach dem vorhergehenden Anspruch,
**dadurch gekennzeichnet, dass**
die Sperrradanordnung (9, 11) so ausgebildet ist, dass die genau eine Umfangsposition (12) einstellbar ist.

4. Kupplung nach einem der beiden vorhergehenden Ansprüche,
**dadurch gekennzeichnet, dass**
die Sperrradanordnung (9, 11) ein Sperrrad (9) mit einer Mehrzahl von über den Umfang verteilten asymmetrischen Zahnflanken aufweist,
wobei sich neben dem Sperrrad ein Kodierrad (11) befindet, welches nur an genau einer Umfangsposition eine Aussparung (12) aufweist, so dass die Sperrklinkenanordnung (10) nur an der genau einen Umfangsposition (12) eingreifen kann.

5. Kupplung nach dem vorhergehenden Anspruch,
**dadurch gekennzeichnet, dass**
mindestens ein weiteres Kodierrad vorhanden ist, welches genau eine Vertiefung am Umfang aufweist.

6. Verfahren zum Kuppeln einer ersten Welle (2) mit einer zweiten Welle (6),
wobei eine Kuppeleinrichtung (1) eingesetzt wird, mit der ein Kuppelwinkel zwischen erster Welle (2) und zweiter Welle (6) mechanisch vorgegeben ist, **dadurch gekennzeichnet, dass** zugleich eine Steuerung des Kuppelns durch Beeinflussung der Drehgeschwindigkeit der ersten Welle (2) und/oder der zweiten Welle (6), und/oder durch Beeinflussung des Kuppelzeitpunkts derart erfolgt, dass die Steuerung des Kuppelns das Erreichen des mechanisch vorgegebenen Kuppelwinkels unterstützt.

## Claims

1. Coupling of a first shaft (2) to a second shaft (6), which is configured such that coupling of the first shaft (2) to the second shaft (6) takes place when the first shaft (2) has a greater speed than the second shaft (6),
**characterized in that**
a coupling angle between the first shaft (2) and second shaft (6) is mechanically defined by the coupling (1), **in that** the coupling is configured as a self-synchronizing clutch coupling with the following structure:
the first shaft (2) has a region (3) with helical grooves,
a sliding component (4) is attached to the region (3) with helical grooves such that the sliding component (4) moves in the axial direction of the first shaft (2) on account of the helical grooves when the rotational speeds of the first shaft (2) and of the sliding component (4) do not correspond;
the sliding component (4), by moving in the axial direction of the first shaft (2), can be brought into a position such that the first shaft (2) and the second shaft (6) are connected together in a force-fitting manner;
a ratchet wheel arrangement (9, 11) is attached to the sliding component (4);
the second shaft (6) has a pawl arrangement (10) which engages in the ratchet wheel arrangement (9, 11) as soon as the first shaft (2) has a greater rotational speed than the second shaft (6), such that the sliding component (4) rotates at the rotational speed of the second shaft (6), with the result that the sliding component (4) moves in the axial direction of the first shaft (2) and connects the first shaft (2) and the second shaft (6) in a force-fitting manner;
wherein the ratchet wheel arrangement (9, 11) is configured such that engagement of the pawl arrangement (10) is possible at precisely one circumferential position (12).

2. Coupling according to Claim 1,
**characterized in that**
the mechanically defined coupling angle is settable, in particular with regard to avoiding imbalances.

3. Coupling according to the preceding claim,
**characterized in that**
the ratchet wheel arrangement (9, 11) is configured such that the precisely one circumferential position (12) is settable.

4. Coupling according to either of the two preceding claims,
**characterized in that**
the ratchet wheel arrangement (9, 11) has a ratchet wheel (9) with a plurality of asymmetrical tooth flanks distributed around the circumference,
wherein an encoder wheel (11) is located next to the ratchet wheel, said encoder wheel (11) having a cutout (12) at precisely one circumferential position, such that the pawl arrangement (10) can engage only at the precisely one circumferential position (12).

5. Coupling according to the preceding claim,
**characterized in that**
at least one further encoder wheel is provided, which has precisely one recess in its circumference.

6. Method for coupling a first shaft (2) to a second shaft (6),
wherein a coupling device (1) is used, with which a coupling angle between the first shaft (2) and second shaft (6) is mechanically defined,
**characterized in that**,
at the same time, control of the coupling takes place by the rotational speed of the first shaft (2) and/or of the second shaft (6) being influenced, and/or by the coupling time being influenced, such that the control of the coupling supports the achievement of the mechanically defined coupling angle.

## Revendications

1. Accouplement d'un premier arbre (2) à un deuxième arbre (6), qui est constitué de manière à ce qu'un accouplement du premier arbre (2) avec le deuxième arbre (6) s'effectue lorsque le premier arbre (2) a une vitesse plus grande que le deuxième arbre (6),
**caractérisé en ce qu'**
un angle d'accouplement, entre le premier arbre (2) et le deuxième arbre (6), est donné à l'avance mécaniquement par l'accouplement (1) **en ce que** l'accouplement est constitué sous la forme d'un embrayage se synchronisant de soi-même en ayant la structure suivante :
le premier arbre (2) a une partie (3) ayant des rainures hélicoïdales,
un élément (4) glissant est monté dans la partie (3) ayant des rainures hélicoïdales, de manière à ce que l'élément (4) glissant se déplace, en raison des rainures hélicoïdales, dans la direction axiale du premier arbre (2) lorsque la vitesse de rotation du premier arbre (2) et de l'élément (4) glissant ne coïncide pas;
l'élément (4) glissant peut, par déplacement dans la direction axiale du premier arbre (2), être mis dans une position où le premier arbre (2) et le deuxième arbre (6) sont assemblés à coopération de force;
sur l'élément (4) glissant est mis un agencement (9, 11) à rochet;
le deuxième arbre (6) a un agencement (10) à cliquet, qui pénètre dans l'agencement (9, 11) à rochet dès que le premier arbre (2) a une vitesse de rotation plus grande que le deuxième arbre (6), de sorte que l'élément (4) glissant tourne à la vitesse de rotation du deuxième arbre (6), grâce à quoi l'élément (4) glissant se déplace dans la direction axiale du premier arbre (2) et relie, à coopération de force, le premier arbre (2) et le deuxième arbre (6);
l'agencement (9, 11) à rochet étant constitué de manière à rendre possible une pénétration de l'agencement (10) à cliquet exactement en une position (12 ) du pourtour.

2. Accouplement suivant la revendication 1,
**caractérisé en ce que**
l'angle d'accouplement donné à l'avance mécaniquement est réglable, notamment en vue d'éviter des balourds.

3. Accouplement suivant la revendication précédentes,
**caractérisé en ce que**
l'agencement (9, 11) à rochet est constitué de manière à pouvoir régler la exactement une position (12 ) de pourtour.

4. Accouplement suivant l'une des revendications précédentes,
**caractérisé en ce que**
l'agencement (9, 11) à rochet a un rochet (9) ayant une pluralité de flancs de dent dissymétriques répartis sur le pourtour,
dans lequel, à côté du rochet, se trouve une roue (11) de codage, qui a seulement, à exactement une position de pourtour, un creux (12 ), de manière à ce que l'agencement (10) à cliquet ne puisse pénétrer qu'à la exactement une position (12 ) de pourtour.

5. Accouplement suivant la revendication précédente,
**caractérisé en ce qu'**
il y a au moins une autre roue de codage, qui a exactement une cavité sur le pourtour.

6. Procédé d'accouplement d'un premier arbre (2) à un deuxième arbre (6),
dans lequel on utilise un dispositif (1) d'accouplement, par lequel un angle d'accouplement, entre le premier arbre (2) et le deuxième arbre (6), est donné à l'avance mécaniquement,
**caractérisé en ce que**
on effectue en même temps une commande de l'accouplement en influençant la vitesse de rotation du premier arbre (2) et/ou du deuxième arbre (6) et/ou en influençant l'instant d'accouplement, de manière à ce que la commande de l'accouplement vienne au soutien de l'angle d'accouplement donné à l'avance mécaniquement.
